# EUROPÄISCHE PATENTSCHRIFT

(11) **EP 0 927 095 B1**
(45) Veröffentlichungstag und Bekanntmachung des Hinweises auf die Patenterteilung: **27.06.2001**
(21) Anmeldenummer: 97938740.4
(22) Anmeldetag: 18.09.1997
(51) Int. Cl.: B29B 7/82, B29B 9/06, B29B 9/10

(54) **VORRICHTUNG ZUM HOMOGENISIEREN, MISCHEN UND/ODER GRANULIEREN VON CHEMISCHEN STOFFEN**
DEVICE FOR HOMOGENIZING, MIXING AND/OR GRANULATING CHEMICAL SUBSTANCES
DISPOSITIF POUR HOMOGENEISER, MELANGER ET/OU GRANULER DES MATIERES CHIMIQUES

(30) Priorität: 23.09.1996 DE 19638994
(43) Veröffentlichungstag der Anmeldung: 07.07.1999
(73) Patentinhaber: Bühler AG, 9240 Uzwil (CH)
(72) Erfinder: VAN LENGERICH, Bernhard, Plymouth, MN 55441 (US); STALDER, Bernhard, CH-9244 Niederuzwil (CH); ZÜND, Alfred, CH-9244 Niederuzwil (CH); MUNZ, Konrad, CH-8578 Neukirch an der Thur (CH); INNEREBNER, Federice, CH-8004 Zürich (CH); FEURER, Fritz, CH-9524 Zuzwil (CH)
(86) Internationale Anmeldenummer: CH9700353
(87) Internationale Veröffentlichungsnummer: WO9813181

(56) Entgegenhaltungen:
- EP-A- 0 140 846
- EP-A- 0 348 800
- EP-A- 0 435 023
- EP-A- 0 578 603
- DE-A- 1 779 926
- US-A- 4 123 207
- US-A- 4 321 026
- US-A- 4 421 470
- US-A- 4 720 251
- US-A- 4 764 100
- US-A- 4 856 974
- US-A- 5 273 356
- US-A- 5 629 028

## Beschreibung

Die Erfindung betrifft eine Vorrichtung zum Homogenisieren, Mischen und/oder Granulieren von mindestens aus einer Stoffkomponente bestehenden chemischen Stoffen mittels eines mehrere Gehäuseabschnitte, mindestens einer Schnecke, einer Düsenanordnung und mindestens einer Schneidevorrichtung aufweisenden Extruders. Der oberbegrift des Anspruchs 1 basiert auf der EP-A-435 023.

Bei bestimmten Granulaten von chemischen Stoffen, insbesondere Zusatzstoffen, ist eine hohe Produktionsrate erforderlich. Da diese chemischen Stoffe häufig aus Stoffkomponenten mit unterschiedlichsten physikalischen Eigenschaften (Schmelzpunkt, Wassergehalt, Schmelzviskosität, Mischbarkeit, Adhäsionseigenschaften, etc.) bestehen, treten bei der Granulierung Schwierigkeiten auf, insbesondere wenn eine hohe Durchsatzmenge gefordert wird. Beispielsweise bilden sich im Extruder unerwünschte Ablagerungen, Verstopfungen der Düsen, die eine Granulierung erschweren oder nicht mehr ermöglichen. Darüberhinaus können die einzelnen Komponenten unterschiedliche Einziehverhalten aufweisen.

Aus der DE 38 32 006 A1 ist ein Extruder zum Granulieren einer Formmasse und Verwendung eines solchen Extruders bekannt geworden. Der Extruder ermöglicht es, eine gleichmässige Verteilung der zu verarbeitenden Formmasse über den gesamten Querschnitt der Formgebungsplatte zu schaffen.

Eine Lochplatte zur Granulierung von Kunststoffsträngen ist in der DE 39 34 592 beschrieben. Die Lochplatte ist so gestaltet, dass Ablagerungen und damit verbundene Produktverunreinigungen verhindert werden sollen.

In der DE 42 43 549 A1 ist die Herstellung verdichteter, oberflächlich klebriger Granulate sowie die zur Durchführung des Verfahrens geeignete Vorrichtung offenbart. Es sollen nach diesem Verfahren auch bei sehr hohen Durchsätzen und ohne Einschränkung des Rezepturspektrums, Anbackungen und Anhaftungen der Granulate an der Innenwand des Granulierschachtes vermieden werden.

Aus der US-A-4 321 026 ist ein Extruder bekannt geworden, in dem ein Scheibenartiges Isolator im Düsenbereich verwendet wird.

Der Erfindung liegt somit die Aufgabe zugrunde, eine Vorrichtung der o.g. Art vorzuschlagen, welche bei möglichst hoher Durchsatzrate einerseits eine optimale Homogenisierung und Mischung der Extrudermasse und andererseits eine gleichmässige Granulierung mit den gewünschten Eigenschaften der Granulate ermöglichen.

Erfindungsgemäss wird die Aufgabe gemäß Anspruch 1 gelöst.

Aufgrund der Tatsache, dass die verschiedenen Ausgangsstoffe unterschiedliche Temperatureigenschaften besitzen, ist es erforderlich über den ganzen Extruderprozess ein bestimmtes Temperaturprofil einzustellen. Hierbei können hohe Temperatursprünge erforderlich sein, welche dann durch die thermischen Entkopplungen und die Möglichkeit des Heizens und/oder Kühlens der einzelnen Extrudergehäuseabschnitte erreicht werden. Oftmals wird zu Beginn des Extruderprozesses mit einer hohen Temperatur und am Extruderausgang mit einer niedrigen Temperatur gefahren. Ebenso kann eine bestimmte Schneckenkonfiguration zu einem guten Ergebnis beitragen.

Um eine gleichmässige Verteilung der Extrudermasse zu erreichen, ist der Extruderstrang vor Eintritt in die Düsenanordnung ringförmig ausgebildet, wobei der Durchmesser des ringförmigen Stranges zur Düsenanordnung hin zunimmt. Hierbei herrscht vor den Düsen eine gleichmässige Druckverteilung.

Weiterhin ist es vorgesehen, insbesondere bei Stranggranulierung exzentrische Düsen zu verwenden.

In vorteilhafter Weise kann der in einzelne Düsenstränge aufgeteilte Extruderstrang mittels einer unmittelbar hinter der Düsenanordnung oder einer abseits vom Extruder angeordneten Schneidevorrichtung zerteilt werden.

Weitere bevorzugte Merkmale und Kombinationen davon ergeben sich aus den Unteransprüchen und der nachfolgenden Figurenbeschreibung.

Ausführungsbeispiele sind im folgenden anhand von Zeichnungen dargestellt. Es zeigen:
- Fig. 1: eine schematische Darstellung des Extruderprozesses,
- Fig. 2: eine schematische Darstellung des Extruderaufbaues,
- Fig. 3: eine Düsenanordnung,
- Fig. 4: eine Schnittdarstellung A - A der Fig. 3,
- Fig. 5: einen Düseneinsatz,
- Fig. 6: eine Schnittdarstellung des Überganges von Extruderausgang zur Düsenanordnung,
- Fig. 7: eine weitere Düsenanordnung,
- Fig. 8: eine Messeranordnung der Schneidevorrichtung,
- Fig. 9: eine Schnittdarstellung der Schneidevorrichtung.

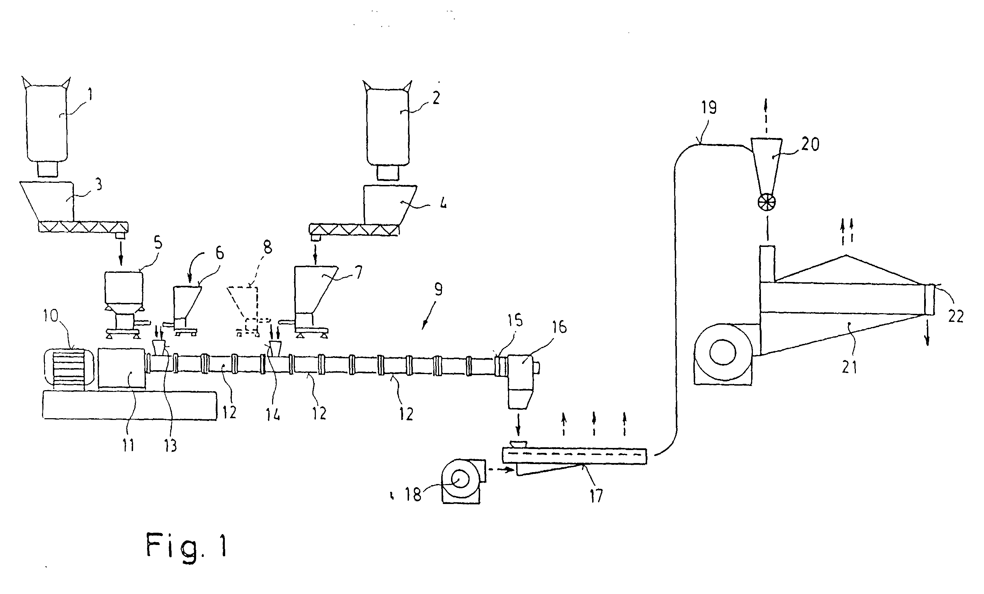

Die Figur 1 zeigt ein Beispiel einer schematischen Darstellung des erfindungsgemässen Extruderprozesses. Die Ausgangsstoffe werden von den Vorratsbehältem 1 und 2 in Zuführeinrichtungen 3 und 4 eingebracht. Je nach den Ausgangsstoffen werden diese in mindestens einem Mischer 5 vorgemischt oder direkt in die Dosiereinrichtungen 6 und 7 eingegeben. Sollte zur besseren Prozessführung weitere Komponenten erforderlich sein, können diese beispielsweise über eine weitere Dosiereinrichtung 8 in den Prozess eingeführt werden.

Der Extruder 9 mit dem Antrieb 10 und dem Getriebe 11 besteht aus mehreren Extrudergehäuseabschnitten 12. Zur Eindosierung sind in einzelnen Extrudergehäuseabschnitten 12 Öffnungen 13 und 14 zur Eindosierung vorgesehen. Am Extruderausgang ist eine Düsenanordnung 15 vorgesehen, hinter der sich eine Schneidevorrichtung 16 befindet. Das frisch granulierte Endprodukt gelangt anschliessend zur Kühlung und Trocknung mittels eines Ventilators 18 auf ein Transportband 17. Zur weiteren Trocknung kann das Extrudat über eine Fördereinrichtung 19 einen Entstaubungsfilter oder Zyklon 20 in einen Trockner 21 mit anschliessendem Austrag 22 geleitet werden.

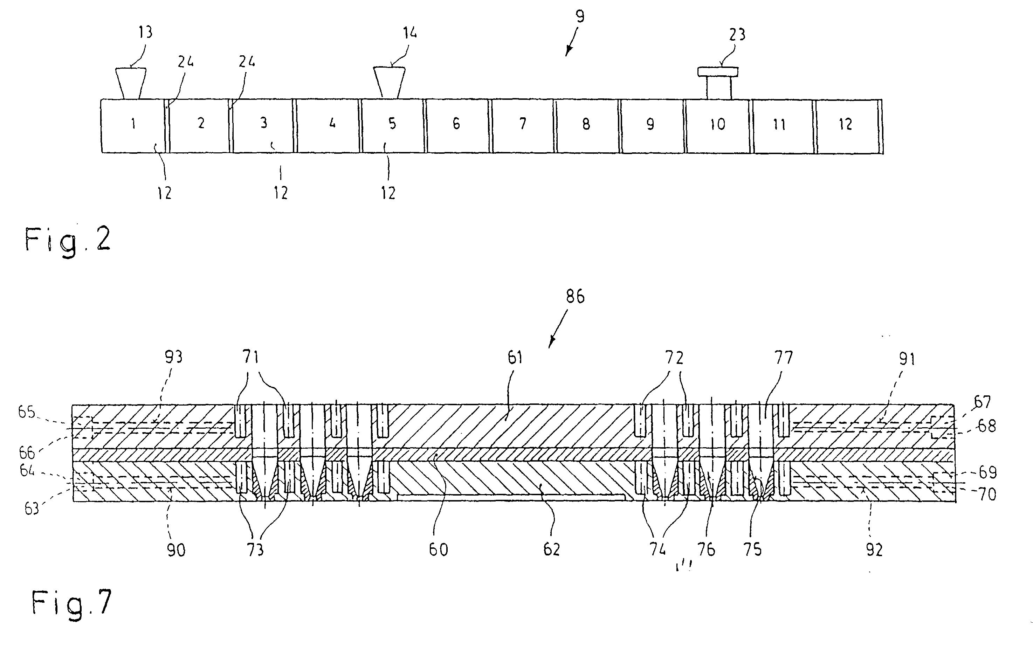

In Figur 2 ist eine mögliche Extruderstrecke dargestellt. Der Extruder 9 besteht hier aus zwölf Extrudergehäuseabschnitten 12, welche durch scheibenförmige Isolatoren 24 voneinander getrennt sind. Durch diese thermische Entkopplung ist es möglich ein genau definiertes Temperaturprofil einzustellen. Besonders vorteilhaft ist es zu Beginn des Extruderprozesses mit einer hohen Temperatur zu beginnen und am Extruderausgang mit einer tiefen Temperatur zu fahren. Typischerweise liegen die Anfangstemperaturen des Gehäuses von 15°C bis 250 °C, vorzugsweise von 100°C bis 200 °C und die Temperatur am letzten Gehäuseabschnitt von -30°C bis 220°C, vorzugsweise von 20°C bis 150°C. Es ist aber auch ein beliebiges, produktabhängiges Temperaturprofil denkbar. Die Öffnungen 13 und 14 dienen zu einer gegebenenfalls gewünschten gestaffelten Eindosierung verschiedener Stoffkomponenten. Weiterhin ist in mindestens einem Extrudergehäuseabschnit ein Anschluss 23 für eine Vakuumpumpe vorgesehen, um überschüssige Feuchtigkeit zu entziehen.

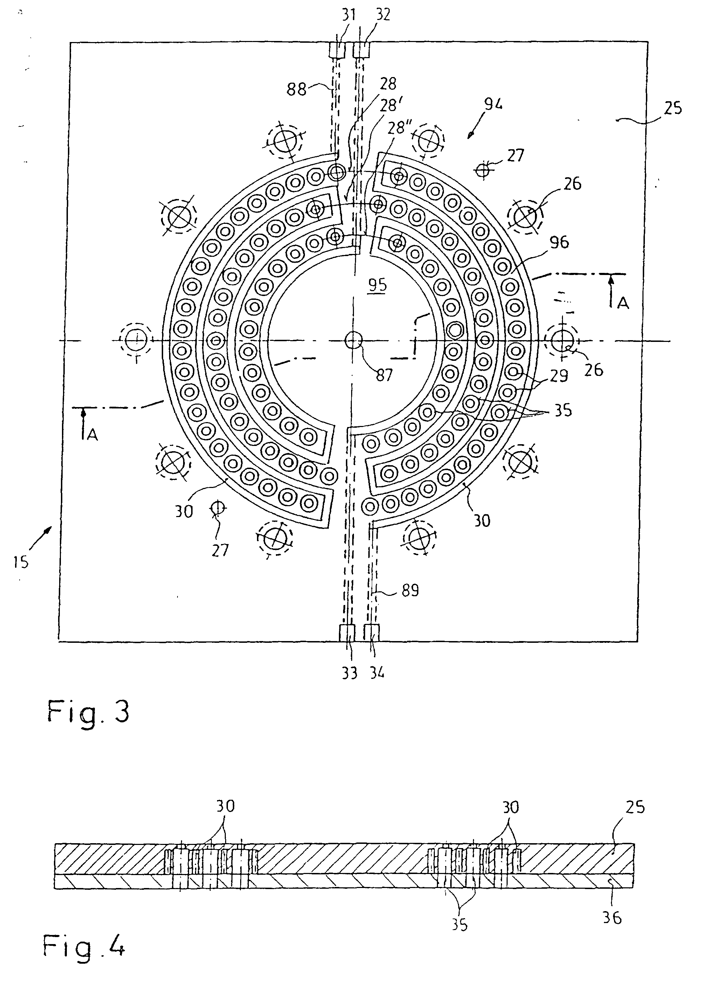

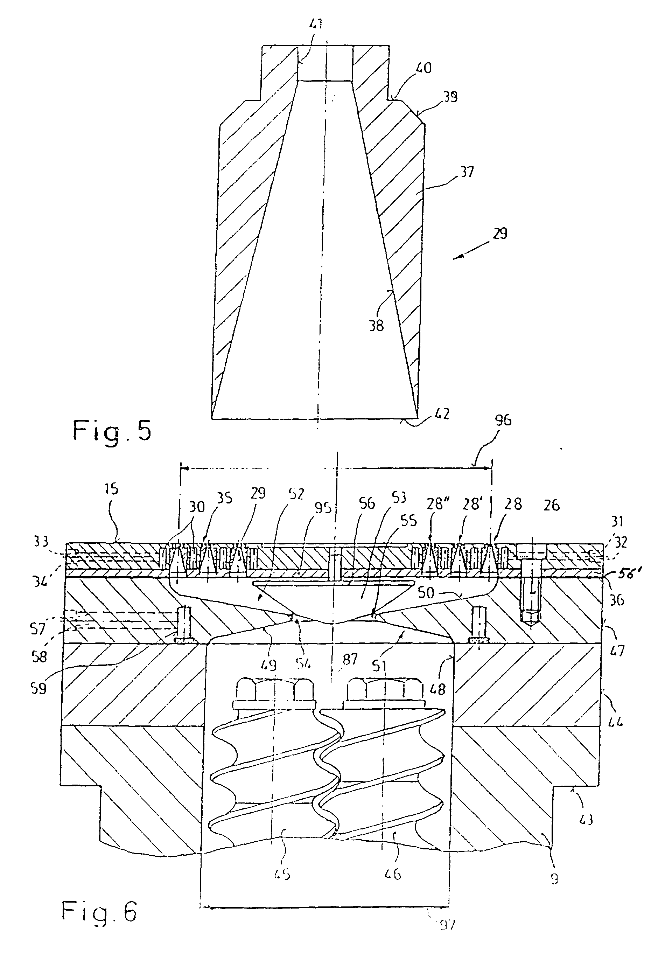

Die Figuren 3 und 4 zeigen eine mögliche Düsenanordnung 15, wobei die Figur 4 einen Schnitt entlang der Linie A-A der Figur 3 darstellt. Die Düsenanordnung 15 weist eine Düsenplatte 25 mit einer Abdeckplatte 36 auf, welche mittels der Schrauben 26 am letzten Gehäuseabschnitt 43 gegebenenfalls über Zwischenstücke 44 und 47 und durch Zentrierungen 27 befestigt ist (siehe Figur 6). In der Düsenplatte 25 sind auf zur Mitte 87 der Düsenplatte 25 konzentrischen Kreisen 28, 28' und 28" Bohrungen 35 für die Düsen 29 angeordnet, wobei der Mittelbereich 95 der Düsenplatte 25 geschlossen ist, so dass sich die Düsenkreise 28, 28' und 28" möglichst weit im äusseren Umfangsbereich 94 der Düsenplatte 25 befinden. Der Durchmesser 96 des äusseren Düsenkreises 28 ist hier grösser als der Durchmesser 97 des freien Querschnittes am Extruderausgang (siehe Figur 6). Weiterhin ist vorgesehen die Düsen 29 zu kühlen und/oder zu heizen. Hierfür sind beidseitig der Bohrungen 35 für die Düsen 29 Kühl- und Heizkanäle 30 ausgebildet. Die Kanäle 30 bilden zusammen mit den Zu- und Ablaufleitungen 31, 32, 33 und 34 zwei Kreisläufe 88 und 89. Mit dieser Abordnung ist eine optimale Temperaturverteilung auf der Düsenplatte gewährleistet.

Die eigentliche Düse 29 zeigt in einem Schnitt die Figur 5. Die Formgebung der Düse bezweckt, dass nur die Oberfläche der Düsenlöcher 38 und 41 gekühlt oder geheizt wird und nicht der ganze Düsenkörper. Die Düse 29 ist an der Aussenfläche 37 zylindrisch mit einer stufenförmigen Verengung 40 geformt. Am Übergang zur Verengung 40 ist eine Abschrägung 39 angebracht. Der Düseneingang 42 ist an der Innenfläche 38 trichterförmig ausgebildet und der Düsenausgang 41 zylindrisch. Bei dem Verfahren ist die Einstellung der Düsentemperatur von erheblicher Bedeutung. Sie beträgt 120°C bis 210°C, vorzugsweise 180°C bis 200°C.

Die Figur 6 zeigt den Übergang vom Extruder 9 zur Düsenanordnung 15 Zwischen der Düsenanordnung 15 und dem letzten Extrudergehäuseabschnitt 43 befindet sich ein Ausgleichsstück 44 und ein Zwischenstück 47. Die beiden Extruderschnecken 45 und 46 sind angedeutet. Das Zwischenstück 47 weist zwei trichterförmige Bereiche 51 und 52 auf, wobei der Bereich 51 mit seinem grösseren Querschnitt zum Extruder und der Bereich 52 mit seinem grösseren Querschnitt zur Düsenanordnung weist. Der maximale Durchmesser der Öffnung 49 des Bereiches 51 ist gleich gross wie der Durchmesser 97 des freien Extruderquerschnittes 48. Der maximale Durchmesser der Öffnung 50 des Bereiches 52 ist gleich gross wie der Durchmesser 96 des äusseren Düsenkreises 28, der wiederum grösser ist als der Durchmesser 97 des freien Extruderquerschnittes 48. Im Mittelbereich 95 der Düsenanordnung 15 und im Bereich 52 ist ein Staukörper 53 angebracht. Der Staukörper 53 in Verbindung mit dem Zwischenstück 47 erzeugt eine ringförmige Öffnung 54. Dieser ringförmige, Widerstand bildende Durchlass 55 sorgt für eine gleichmässige Verteilung der Extrudermasse am Umfang der Düsenanordnung 15. Die Konturen der trichterförmigen Bereiche ist entsprechend den Stromlinien der Extrudermasse ausgebildet, um Totzonen in Ecken zu vermeiden. Darüberhinaus ist die Geometrie des Zwischenstückes, insbesondere des Bereiches 51, so gewählt, dass sich auf allen Düsen 29 ein gleicher Druck einstellt. Alle Bauteile 43, 44, 47, 53, und 15 können voneinander thermisch entkoppelt sein. In der Figur 6 sind scheibenförmige Isolatoren 56 und 56' zwischen der Düsenanordnung 15 und dem Zwischenstück 47 und zwischen der Düsenanordnung 15 und dem Staukörper 53 gezeigt. Ferner kann das Zwischenstück 47 mittels eines Kreislaufes aus der Zu- 57, Ableitung 58 und Kanal 59 gekühlt oder geheizt werden.

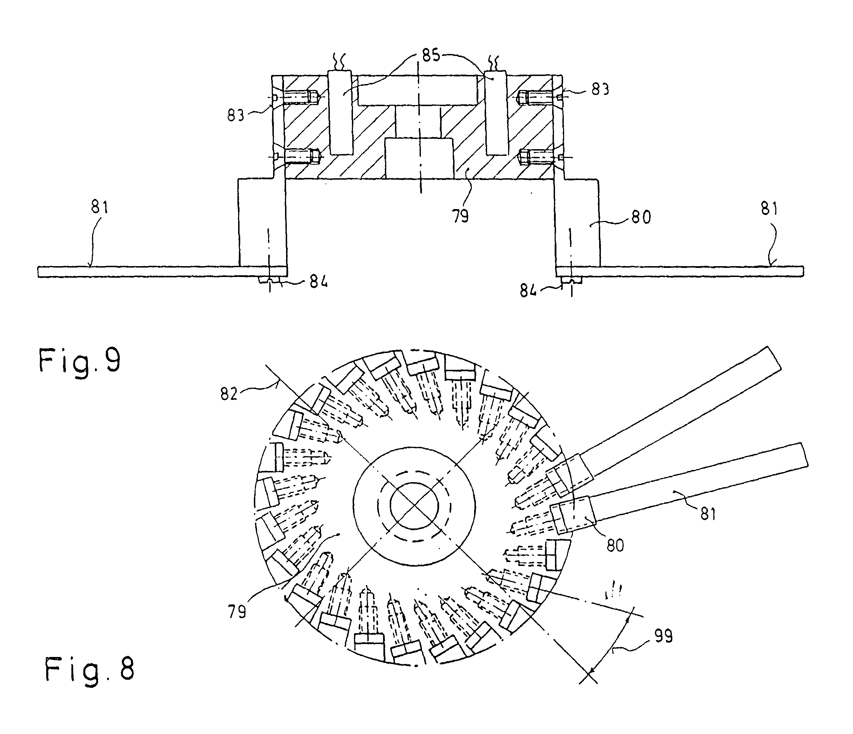

Eine weitere Düsenanordnung 86 zeigt die Figur 7. Sie besteht aus zwei Düsenplatten 61 und 62, die wiederum durch einen scheibenförmigen Isolator 60 thermisch entkoppelt werden können. Auch sind in beiden Düsenplatten Kanäle 71, 72, 73 und 74 und Leitungen 63, 64, 65, 66, 67, 68, 69 und 70 für Kreisläufe 90, 91, 92 und 93 zur Heizung oder Kühlung vorgesehen. In Düsenbohrungen 75 sind die Düseneinsätze 76 gezeigt. Die zum Extruder weisende Düsenplatte 61 weist zylindrische Bohrungen 77 auf. Diese Düsenanordnung 86 dient insbesondere dazu, ein am Extruderausgang fast flüssiges Produkt hinter der Düsenanordnung granulierfähig zu machen.

Die Figuren 8 und 9 zeigen die Schneidevorrichtung 16. Sie weist einen Messerkopf 79, Messerhalter 80 und Messerklingen 81 auf. Die Messerhalter 80 werden beispielsweise mittels Schrauben 83 am Messerkopf gehalten, die wiederum die Messerklingen 81 mit Schrauben 84 tragen. Die Messer können strahlenförmig radial nach aussen weisen. Oder sie bilden, wie in der Figur dargestellt mit den gedachten Radien 82 einen bestimmten Winkel 99, wobei der Winkel 99 so gewählt ist, dass sich eine optimale Anzahl von Messern ergibt. Im Messerkopf 79 können Mittel zur Heizung und Kühlung vorhanden sein. Dies kann induktiv, durch Anblasen, durch Kreisläufe mittels Kühl- oder Heizmedien oder durch Heizpatronen 85 geschehen.

Weiterhin kann am Extruderausgang eine Sprühvorrichtung vorgesehen sein, die das austretende heisse Produkt mit Wasser besprüht, wobei die Verdampfungswärme zur Abkühlung des Produktes ausgenutzt wird. Die Sprühvorrichtung ist in der Zeichnung nicht dargestellt.

Die mit der Erfindung verbundenen Vorteile liegen insbesondere darin, Extrudermassen aus klebrigen, klumpenbildenden Ausgangsprodukten zu homogenisieren, mischen und granulierfähig zumachen, wobei die Granulate möglichst gleichmässig ausgebildet sind. Das Verfahren eignet sich insbesondere bei Mehrkomponentenstoffen mit unterschiedlichsten physikalischen Eigenschaften.

### Bezugszeichenliste

- 1: Vorratsbehälter
- 2: Vorratsbehälter
- 3: Zuführeinrichtung
- 4: Zuführeinrichtung
- 5: Mischer
- 6: Dosiereinrichtung
- 7: Dosiereinrichtung
- 8: Dosiereinrichtung
- 9: Extruder
- 10: Antrieb
- 11: Getriebe
- 12: Extrudergehäuseabschnitte
- 13: Öffnungen
- 14: Öffnungen
- 15: Düsenanordnung
- 16: Schneidevorrichtung
- 17: Transportband
- 18: Ventilator
- 19: Fördereinrichtung
- 20: Filter
- 21: Trocknung
- 22: Austrag
- 23: Anschluss für Vakuumpumpe
- 24: Isolatoren
- 25: Düsenplatte
- 26: Schrauben
- 27: Zentrierungen
- 28, 28',28": Düsenkreise
- 29: Düsen
- 30: Kühl- oder Heizkanäle
- 31: Leitung
- 32: Leitung
- 33: Leitung
- 34: Leitung
- 35: Bohrungen
- 36: Abdeckplatte
- 37: Aussenfläche
- 38: Innenfläche
- 39: Abschrägung
- 40: Verengung
- 41: Düsenausgang
- 42: Düseneingang
- 43: Extrudergehäuseabschnitt
- 44: Ausgleichsstück
- 45: Extruderschnecke
- 46: Extruderschnecke
- 47: Zwischenstück
- 48: freier Extruderquerschnitt
- 49: freier Querschnitt
- 50: freier Querschnitt
- 51: trichterförmiger Bereich
- 52: trichterförmiger Bereich
- 53: Staukörper
- 54: Öffnung
- 55: ringförmiger Durchlass
- 56, 56': Isolator
- 57: Leitung
- 58: Leitung
- 59: Kanal
- 60: Isolator
- 61: Düsenplatte
- 62: Düsenplatte
- 63: Leitung
- 64: Leitung
- 65: Leitung
- 66: Leitung
- 67: Leitung
- 68: Leitung
- 69: Leitung
- 70: Leitung
- 71: Kanäle
- 72: Kanäle
- 73: Kanäle
- 74: Kanäle
- 75: Düsenbohrung
- 76: Düseneinsatz
- 77: Bohrung
- 79: Messerkopf
- 80: Messerhalter
- 81: Messerklinge
- 82: Radius
- 83: Schrauben
- 84: Schrauben
- 85: Heizpatronen
- 86: Düsenanordnung
- 87: Extruderachse, Mitte
- 88: Kreislauf
- 89: Kreislauf
- 90: Kreislauf
- 91: Kreislauf
- 92: Kreislauf
- 93: Kreislauf
- 94: Umfangsbereich
- 95: Mittelbereich
- 96: Durchmesser des äusseren Düsenkreises
- 97: Durchmesser des freien Extruderquerschnittes
- 99: Winkel

## Patentansprüche

1. Vorrichtung zum Behandeln von mindestens aus einer Stoffkomponente bestehenden chemischen Stoffen mittels eines Extruders (9), der mindestens eine sich in Axialrichtung erstreckende Schnecke (45, 46) in einem diese Schnecke umgebenden Extrudergehäuse (12, 12, 12), das aus einzelnen, voneinander gesonderten, miteinander zusammengefügten Gehäuseabschnitten (12) aufgebaut ist, eine Düsenanordnung (28, 29) und mindestens eine Schneidevorrichtung (16) aufweist, und das Extrudergehäuse (12, 12, 12) mindestens zwei in Axialrichtung voneinander getrennte Öffnungen (13, 14) zum Dosieren in jeweils einem dieser Gehäuseabschnitte (12) besitzt, dadurch gekennzeichnet,
a) dass zwischen den voneinander gesonderten Gehäuseabschnitten (12) ein scheibenförmiger Isolator (24) zwischengeschaltet ist, und
b) dass die so voneinander thermisch isolierten Gehäuseabschnitte (12) mittels je eines Paares von Zu- (57) und Ableitungen (58) mit einem Heiz- und/oder Kühlmedium versorgbar sind.

2. Vorrichtung nach Anspruch 1, dadurch gekennzeichnet, dass auch die Extruderschnecke(n) (45, 46) entsprechend den Extrudergehäuseabschnitten (12, 43) voneinander thermisch isoliert sind.

3. Vorrichtung nach Anspruch 1 oder 2, dadurch gekennzeichnet, dass mindestens ein von anderen Gehäuseabschnitten isolierter Gehäuseabschnitt (12, 43) des Extruders (9) evakuierbar ist.

4. Vorrichtung nach mindestens einem der Ansprüche 1, 2 oder 3, dadurch gekennzeichnet, dass die Düsenanordnung (15, 86) mehrere in Bohrungen (35, 75) angeordnete Düsen (29, 76) aufweist, wobei die einzelnen Bohrungen (35, 75) auf mindestens einem zur Extruderachse (86) konzentrischen Kreis (28, 28', 28") vorgesehen sind, und dass vorzugsweise der Durchmesser (96) des äusseren Düsenkreises (28) grösser als der Durchmesser (97) des freien Querschnittes (48) des letzten Gehäuseabschnittes (43) ist.

5. Vorrichtung nach mindestens einem der vorherigen Ansprüche, dadurch gekennzeichnet, dass die Innenflächen (38) der Düsen (29, 76) im wesentlichen trichterförmig und die Aussenflächen (37) im wesentlichen zylindrisch sind.

6. Vorrichtung nach mindestens einem der vorherigen Ansprüche, dadurch gekennzeichnet, dass die Düsenanordnung (15, 86) Mittel zur Heizung und/oder Kühlung der Düsen (29, 76) aufweist, und dass vorzugsweise beidseitig der um die Extruderachse (86) auf konzentrischen Kreisen (28, 28',28") angeordneten Düsen (29, 76) Heiz-/Kühlmittel führende Kanäle (30, 71) vorgesehen und zur Bildung mindestens eines Kreislaufes (88, 89, 90, 91, 92, 93) entsprechend verbunden sind.

7. Vorrichtung nach mindestens einem der vorherigen Ansprüche, dadurch gekennzeichnet, dass auch der Düsenanordnung (15, 86) eine thermische Isolation zugeordnet ist, und diese thermische Isolation entweder gegenüber dem letzten Gehäuseabschnitt (43) vorgesehen ist und/oder die Düsenanordnung (15, 86) zwei thermisch voneinander isolierte Düsenplatten (61, 62) aufweist, wobei beide Düsenplatten gesondert heiz- und/oder kühlbar sind.

8. Vorrichtung nach mindestens einem der vorherigen Ansprüche, dadurch gekennzeichnet, dass die Düsenanordnung (15, 86) nur im Umfangsbereich (94) auf zur Extruderachse (87) konzentrischen Kreisen (28, 28',28") angeordnete Düsen (29, 76) aufweist, wobei im Mittelbereich (95) der Düsenanordnung (15, 86) ein zum Extruder (9) gerichteter Staukörper (53) vorgesehen ist, und dass vorzugsweise der Staukörper (53) gegenüber der Düsenanordnung (15, 86) thermisch isoliert ist und/oder bevorzugt zwischen dem Extruderausgang (43) und der Düsenanordnung (15, 86) ein Zwischenstück (47) angeordnet ist, dessen freier Querschnitt (49) vom freien Querschnitt (48) des Extruderausgangs (43) zunächst abnimmt und dann wieder bis zum grössten freien Querschnitt (50) der Düsenanordnung (15, 86) zunimmt, so dass sich nahezu zwei trichterförmige Bereiche (51, 52) ergeben, wobei in dem zur Düsenanordnung (15, 86) weisenden Bereich (52) der Staukörper (53) vorgesehen ist und der Staukörper (53) mit der engsten Öffnung (54) des Zwischenstückes (47) einen ringförmigen Durchlass (55) für die Extrudermasse bildet.

9. Vorrichtung nach mindestens einem der vorherigen Ansprüche, dadurch gekennzeichnet, dass die Schneidevorrichtung (16) einen Messerkopf (79); mindestens einen Messerhalter (80) mit einer Messerklinge (81) aufweist, wobei die einzelnen Messerhalter (80) mit den Messerklingen (81) am Umfang des Messerkopfes (79) angeordnet sind und in Richtung oder unter einem bestimmten Winkel (99) zum Radius (82) des Messerkopfes (79) strahlenförmig nach aussen weisen.

10. Vorrichtung nach mindestens einem der vorherigen Ansprüche, dadurch gekennzeichnet, dass die Messerhalter (80) und/oder Messerklingen (81) der Schneidvorrichtung (16) Mittel zur Heizung und/oder Kühlung aufweisen.

## Claims

1. Device to treat chemical substances consisting of at least one substance component by means of an extruder (9), that has at least one worm (45, 46) extending in axial direction in one of the extruder housings (12,12,12) surrounding this worm, that is constructed from individual, coupled housing sections (12), separated from each other, has a nozzle arrangement (28, 29) and at least one cutter (16) and the extruder housing (12, 12, 12) has at least two openings (13, 14), separated from each other, in the axial direction for dosage in one of these housing sections (12) each, characterised by:
a) a disc-shaped insulator (24) being connected in series between the housing sections (12) separated from each other, and
b) the thus thermally insulated housing sections (12) having the capacity to be supplied with a heating and / or cooling medium by means of a pair of supply lines (57) and discharge lines (58).

2. Device according to Claim 1, characterized by the extruder worm(s) (45, 46) being thermally insulated from each other in correspondence with the extruder housing sections (12, 43).

3. Device according to Claim 1 or 2, characterised by at least one housing section (12, 43), which is insulated from other housing sections of the extruder, being capable of evacuation.

4. Device according to at least one of the Claims 1, 2 or 3, characterised by the nozzle arrangement (15, 86) having several nozzles (29, 76) arranged in bore holes (35, 75), whereby the individual bore holes (35, 75) are provided on at least one ring (28, 28', 28") co-axial to the extruder axle (86), and that preferably the diameter (96) of the outer-most nozzle ring (28) is larger than the diameter (97) of the free cross-section (48) of the last housing section (43).

5. Device according to at least one of the prior Claims, characterised by the inside surfaces (38) of the nozzles (29, 76) being fundamentally funnel-shaped and the outside surfaces (37) being fundamentally cylindrical.

6. Device according to at least one of the prior Claims, characterised by the nozzle arrangement (15, 86) having a means to heat and/or cool the nozzles (29, 76) and by providing channels (30, 71) bearing heating/cooling medium, preferably on both sides of the nozzles arranged around the extruder axle (86) on the co-axial rings (28, 28', 28") and being correspondingly connected to form at least one circuit (88, 89, 90, 91, 92, 93).

7. Device according to at least one of the prior Claims, characterised by the nozzle arrangement (15, 86) being assigned with a thermal insulation and by this thermal insulation being provided either against the last housing section (43) and/or the nozzle arrangement (15, 86) having two nozzle plates (61, 62) thermally insulated from each other, whereby both nozzle plates have the ability of being heated and/or cooled individually.

8. Device according to at least one of the prior Claims, characterised by the nozzle arrangement (15, 86) only having nozzles (29, 78) arranged in the circumference area (94) on rings (28, 28', 28") co-axial to the extruder axle (87), whereby in the centre area (95) of the nozzle arrangement (15, 86) an accumulator (53) aligned to the extruder (9) is provided, and the accumulator (53) is preferably thermally insulated against the nozzle arrangement (15, 86) and/or a separator (47) is preferably arranged between the extruder outlet (43) and the nozzle arrangement, the free cross-section (4) of which initially is reduced from the free cross-section (48) of the extruder outlet (43), to then increase again up to the largest free cross-section (50) of the nozzle arrangement (15, 86), thus resulting in almost funnel-shaped areas (51, 52), whereby, the accumulator (53) is provided in the area (52) pointing to the nozzle arrangement (15, 86) and whereby the accumulator (53) forms a circular outlet (55) for the extruder material with the narrowest opening (54) of the separator (47).

9. Device according to at least one of the prior Claims, characterised by the cutter (16) having a cutter head (79), at least one blade holder (80) with a blade (81), whereby the individual blade holders (80) with the blades (81) are arranged on the circumference of the cutter head (79) and point radial to the outside in the direction, or at a certain angle (99), to the radius (82) of the cutter head (79).

10. Device according to at least one of the prior Claims, characterised by the blade holders (80) and/or the blades (81) of the cutter (16) having means for heating and/or cooling.

## Revendications

1. Dispositif pour le traitement de matières chimiques composées d'au moins un constituant, au moyen d'une extrudeuse (9) qui présente au moins une vis sans fin dans le sens axial (45, 46) dans un corps d'extrusion (12, 12, 12) lui servant d'enveloppe et constitué de différentes sections (12) séparées les unes des autres et assemblées les unes aux autres, une unité de filières (28, 29) et au moins un dispositif de coupe (16); le corps d'extrusion (12, 12, 12) est doté d'au moins deux orifices séparés les uns des autres dans le sens axial (13, 14) pour le dosage dans l'une de ces sections (12). Les caractéristiques sont les suivantes:
a) un isolateur en forme de disque (24) est inséré entre les sections du corps d'extrusion séparées les unes des autres (12), et
b) les sections du corps d'extrusion (12) qui sont isolées thermiquement les unes des autres peuvent être alimentées au moyen d'une conduite d'amenée (57) et d'évacuation (58) avec un fluide de chauffage et/ou de refroidissement.

2. Dispositif conforme au point 1 de la demande de protection de brevet et caractérisé par le fait que la(les) vis d'extrusion (45, 46) sont isolées thermiquement les unes des autres au même titre que les sections du corps d'extrusion (12, 43).

3. Dispositif conforme au point 1 ou 2 de la demande de protection de brevet et caractérisé par le fait qu'au moins une section du corps d'extrusion isolée des autres sections (12, 43) de l'extrudeuse (9) peut être mise sous vide.

4. Dispositif conforme au point 1, 2 ou 3 de la demande de protection de brevet et caractérisé par le fait que l'unité de filières (15, 86) présente plusieurs filières (29, 76) disposées dans des orifices (35, 75), les différents orifices (35, 75) étant prévus sur au moins un cercle concentrique (28, 28', 28") par rapport à l'axe de l'extrudeuse (86), et que le diamètre (96) du cercle de filières extérieur (28) est supérieur au diamètre (97) de la section libre (48) de la dernière section du corps d'extrusion (43).

5. Dispositif conforme à au moins un des points précédents de la demande de protection de brevet et caractérisé par le fait que les parois intérieures (38) des filières (29, 76) sont en forme d'entonnoir et les parois extérieures (37) cylindriques.

6. Dispositif conforme à au moins un des points précédents de la demande de protection de brevet et caractérisé par le fait que l'unité de filières (15, 85) contient du fluide pour le chauffage et/ou le refroidissement des filières (29, 76), et qu'il y a des canaux d'acheminement du fluide de chauffage/refroidissement (30, 71) sur les deux côtés des filières (29, 76) qui sont disposées autour de l'axe d'extrusion (86) sur des cercles concentriques (28, 28', 28"); ces canaux sont reliés pour former au moins un circuit (88, 89, 90, 91, 92, 93).

7. Dispositif conforme à au moins un des points précédents de la demande de protection de brevet et caractérisé par le fait que l'unité de filières (15, 86) est dotée d'une isolation thermique et que cette isolation thermique est prévue soit en face de la dernière section du corps d'extrusion (43) et/ou que l'unité de filières (15, 86) présente deux corps de filières (61, 62) isolés thermiquement les uns des autres, les deux pouvant être chauffés et/ou refroidis séparément.

8. Dispositif conforme à au moins un des points précédents de la demande de protection de brevet et caractérisé par le fait que l'unité de filières (15, 86) présente, seulement dans la zone périphérique (94), des filières (29, 76) placées sur des cercles concentriques (28, 28', 28") par rapport à l'axe de l'extrudeuse, un corps de retenue (53) dirigé vers l'extrudeuse (9) se trouvant dans la zone centrale (95) de l'unité de filières (15, 86), et que le corps de retenue (53) est isolé thermiquement par rapport à l'unité de filières et/ou qu'entre la sortie de l'extrudeuse (43) et l'unité de filières (15, 86) il y a un adaptateur dont la section libre (49) diminue tout d'abord de la section libre (48) à partir de la sortie de l'extrudeuse (43) et augmente ensuite jusqu'à la grande section libre (50) de l'unité de filières (15, 86), si bien qu'il en résulte pour ainsi dire deux zones en forme d'entonnoir (51, 52), le corps de retenue (53) se trouvant dans la zone (52) côté unité de filières (15, 86) et le corps de retenue (53) formant avec la plus petite ouverture (54) de l'adaptateur (47) un passage en forme d'anneau (55) pour la masse d'extrusion.

9. Dispositif conforme à au moins un des points précédents de la demande de protection de brevet et caractérisé par le fait que le dispositif de coupe (16) présente une tête de lame (79), au moins un guide de tête de lame (80) avec une lame (81), les différents guides de tête de lame (80) avec les lames (81) se trouvant sur le pourtour de la tête de lame (79) et étant dirigés vers l'extérieur ou avec un certain angle (99) par rapport au rayon (82) de la tête de lame (79) en forme de rayons.

10. Dispositif conforme à au moins un des points précédents de la demande de protection de brevet et caractérisé par le fait que le guide de tête de lame (80) et/ou les lames (81) du dispositif de coupe (16) contiennent un liquide pour le chauffage et/ou le refroidissement.
